# FASCICULE DE BREVET EUROPEEN

(11) **EP 2 867 603 B1**
(45) Date de publication et mention de la délivrance du brevet: **09.11.2016**
(21) Numéro de dépôt: 13721693.3
(22) Date de dépôt: 06.05.2013
(51) Int. Cl.: B23P 15/26, F28D 20/00

(54) **PROCEDE DE REMPLISSAGE D'UN RESERVOIR DE STOCKAGE DE CHALEUR EN ELEMENTS SOLIDES**
VERFAHREN ZUM FÜLLEN EINES WÄRMESPEICHERTANKS MIT FESTEN ELEMENTEN
METHOD FOR FILLING A HEAT STORAGE TANK WITH SOLID ELEMENTS

(30) Priorité: 09.05.2012 FR 1254226
(43) Date de publication de la demande: 06.05.2015
(73) Titulaire: Commissariat à l'Énergie Atomique et aux Énergies Alternatives, 75015 Paris (FR)
(72) Inventeur: COUTURIER, Raphaël, F-38360 Sassenage (FR); BRUCH, Arnaud, F-69560 Sainte Colombe les Vienne (FR); FOURMIGUE, Jean-François, F-38600 Fontaine (FR)
(74) Mandataire: Brevalex
(86) Numéro de dépôt international: PCT/EP2013/059404
(87) Numéro de publication internationale: WO 2013/167539

(56) Documents cités:
- EP-A1- 2 116 776
- EP-A2- 2 397 672
- DE-U1-202011 106 852
- FR-A1- 2 369 507
- GB-A- 1 034 929
- JP-A- 2000 097 498
- US-A- 4 054 246
- US-A1- 2010 258 266

## Description

### DOMAINE TECHNIQUE ET ART ANTÉRIEUR

La présente invention se rapporte à un procédé de remplissage d'un réservoir de stockage de chaleur en élément solides selon le préambule de la revendication 1. US 4 054 246 divulgue un tel procédé.

De nombreux domaines et de nombreuses applications industrielles mettent en oeuvre le stockage de chaleur. Le stockage de la chaleur permet la valorisation de la chaleur issue de processus industriels, la récupération d'énergie excédentaire ou le découplage entre le moment de production d'énergie thermique et son utilisation.

A titre d'exemple, dans le domaine du solaire thermique à concentration (CSP pour "Concentrated Solar Power" en terminologie anglo-saxonne), l'excédent de chaleur produit aux heures à fort ensoleillement peut ainsi être stocké pour être exploité en fin de journée.

Le stockage de la chaleur peut être typiquement réalisé soit sous forme d'énergie sensible (en faisant varier le niveau de température d'un matériau de stockage solide ou liquide), sous forme d'énergie latente (en faisant changer de phase un matériau de stockage) ou enfin sous forme d'énergie chimique (en utilisant des réactions chimiques endothermiques et exothermiques).

Dans le cas d'un stockage de chaleur par chaleur sensible, la chaleur est stockée par élévation de la température d'un matériau de stockage qui peut être liquide, solide ou une combinaison des deux.

Les procédés industriels impliquant une utilisation ou une conversion de l'énergie thermique au moyen d'un cycle thermodynamique, par exemple par l'utilisation d'une turbine à vapeur, font globalement intervenir deux niveaux de température qui sont les conditions aux bornes du cycle. Le maintien de ces deux niveaux de température les plus constants possibles est recherché afin d'obtenir un fonctionnement optimisé du cycle. En effet, à titre d'exemple, les turbines à vapeur qui assurent la conversion de l'énergie thermique en énergie électrique ont un rendement plus élevé lorsque la température d'entrée dans la turbine est maintenue constante à une valeur prédéfinie. Par conséquent, le stockage associé à de tels systèmes doit donc respecter ces caractéristiques et permettre par exemple de déstocker de la chaleur à un niveau de température constant.

Un exemple de ce type de fonctionnement est le domaine du solaire thermique à concentration où un système de stockage typique est constitué de deux réservoirs remplis de fluide de stockage à deux niveaux de température. Un des réservoirs stocke à une température basse constante et le second réservoir stockage à une température haute constante. La température de sortie du réservoir chaud est donc constante tout au long du déstockage.

Il existe également des systèmes ne comportant qu'un seul réservoir contenant à la fois le fluide chaud et le fluide froid. Il existe alors une stratification thermique au sein du réservoir, le fluide chaud situé en partie supérieure et le fluide froid situé en partie inférieure sont alors séparés par une région de transition appelée « thermocline ».

L'utilisation d'un réservoir unique permet de réduire le nombre de composants, tels que les pompes, vannes etc. et de simplifier le contrôle commande.

Dans un stockage de type thermocline, le matériau de stockage peut être un liquide caloporteur ou, avantageusement, un mélange d'un fluide caloporteur et d'un matériau solide bon marché. L'utilisation d'un tel matériau solide permet de plus d'améliorer la ségrégation du fluide chaud et du fluide froid en diminuant les effets de remélange. Dans ce dernier cas, on parle alors de « thermocline dual » (ou « mixed-media thermocline »).

Ce réservoir "thermocline dual" présente l'avantage de réduire la quantité de liquide nécessaire, sachant que les matériaux solides type roches sont bon marché, le coût total est réduit.

Dans un réservoir thermocline, afin de tenir compte des différences de masse volumique et éviter des mouvements de convection naturelle, le fluide caloporteur est introduit par le haut du réservoir lors de phases de stockage et par le bas du réservoir lors des phases de déstockage. Le stockage est donc caractérisé par une zone chaude en haut de la cuve, une zone froide en bas et une zone de transition entre les deux zones appelée thermocline. Le principe de ce type de stockage de chaleur est de créer un « piston thermique », c'est-à-dire l'avancée d'un front thermique le plus mince possible et uniforme transversalement. Ceci permet de maintenir des températures constantes lors des phases de charge et de décharge.

Lors des phases de charge, le liquide froid est retiré du réservoir par le bas et est échauffé, par exemple en traversant un échangeur thermique d'un collecteur solaire, et ensuite renvoyé dans le réservoir par le haut. Lors d'une phase de décharge, le liquide chaud est retiré du réservoir par le haut, et est envoyé par exemple vers l'évaporateur d'un cycle thermodynamique intégrant une turbine, dans lequel il est refroidi et est ensuite renvoyé dans le réservoir par le bas. Lors des phases de charge et de décharge, le piston thermique se déplace vers le bas et vers le haut respectivement.

Le stockage de type "thermocline dual" basé sur un mélange de fluide caloporteur liquide et de matrice solide met en jeu des vitesses de fluides très faibles de l'ordre de quelques mm/s afin d'assurer le transfert de chaleur entre le fluide et la charge statique et de limiter les inhomogénéités.

En fonctionnement réel, un tel système de stockage présente des inhomogénéités et le piston thermique n'est pas parfait. Ces inhomogénéités peuvent provenir par exemple d'inhomogénéités dans la répartition de la charge statique, formée par exemple par un mélange de roches et de sable, qui peuvent être liées au remplissage initial du réservoir de stockage lors duquel par exemple une ségrégation entre les morceaux de roche et les grains de sable peut survenir, ou au cyclage thermique de la matrice solide qui « vit » au fil des dilatations et contractions thermiques du réservoir. "Roche" et "sable" sont deux termes pour définir des milieux granulaires à fort et faible diamètre respectivement constitués de particules minérales.

Ces inhomogénéités conduisent à l'apparition de chemins préférentiels, à des effets cheminée qui dégradent le fonctionnement en piston thermique et limitent le bon fonctionnement du thermocline. En phase de charge, on peut ainsi arriver à des « langues » chaudes avançant dans le fluide froid. Une forte disparité de température apparaît alors dans un plan transversal du réservoir.

Ce comportement dégradé du réservoir est peu compatible avec les organes de conversion thermique/électrique utilisés dans les centrales solaires à concentration dont le fonctionnement correct requiert une température d'entrée la plus constante possible. Une température d'entrée variable conduit à une diminution du rendement de conversion voire à une sortie de la gamme de fonctionnement admissible.

Le projet américain Solar One de centrale solaire conduit dans les années 1980 est associé à un réservoir de stockage de chaleur, dans lequel le matériau solide est formé par un lit de roche comprenant un mélange composant de 7/11ème de roche et de 4/11ème de sable. Ce lit de roche est réalisé en remplissant le réservoir avec un pré-mélange de roche et de sable puis en tassant ce pré-mélange. Après remplissage, une porosité de 23 % est présente. Il apparaît que ce mélange préalable au remplissage n'est pas satisfaisant. En effet, lors du remplissage la mise en mouvement de particules de tailles différentes engendre des mouvements préférentiels des particules et, dans le cas d'un pré-mélange en tambour, la ségrégation des fines particules vers le centre. Ceci est par exemple illustré sur la figure 1.5 de la thèse de doctorat intitulée « Ecoulement de particules dans un milieu poreux » de F Lominé soutenue le 19 octobre 2007 à l'Université de Rennes 1.

Par conséquent, préalablement au remplissage le mélange n'est déjà pas homogène.

En outre, lors du remplissage une ségrégation apparaît également lors du versement du pré-mélange. Les particules de plus grande taille se retrouvent préférentiellement sur le bord du tas qui se forme. En effet, plus les grains sont gros et plus la surface du tas leur semble lisse. La dissipation d'énergie est donc plus lente et ils parcourent une plus grande distance avant de s'arrêter. Ceci est illustré par la figure 1.7 de la thèse de doctorat mentionnée ci-dessus. Dans ce type de répartition, le fluide rencontre sur les bords du réservoir des zones très pauvres en sable, à l'inverse au centre du réservoir le lit de roche est formé quasiment exclusivement de sable fin. Dans le cas d'un réservoir de chaleur de type « thermocline dual », cela conduit à une circulation préférentielle de l'huile sur les bords du réservoir, le centre constituant une zone « morte » vis-à-vis du stockage thermique.

Enfin, un risque de ségrégation supplémentaire existe lors du tassage. En effet un tel tassage se fait généralement par mise en vibration du lit de roche, ce qui permet certes d'augmenter faiblement la compacité mais peut provoquer une ségrégation entre les grosses particules et les petites particules suivant un phénomène bien connu. Les grosses particules remontent à la surface d'un lit de grains soumis à une vibration. En effet, les petites particules percolent dans les vides laissés sous les gros grains.

Par conséquent le procédé de remplissage du réservoir du projet Solar One n'est pas satisfaisant pour un fonctionnement optimal du réservoir de stockage de chaleur.

### EXPOSÉ DE L'INVENTION

C'est par conséquent un but de la présente invention d'offrir un procédé de remplissage d'un réservoir de stockage de chaleur de type "thermocline dual" avec des éléments solides de stockage thermique comportant au moins deux types d'éléments solides de tailles différentes permettant d'obtenir une répartition homogène des éléments dans le réservoir, assurant ainsi un fonctionnement correct du réservoir.

Le but de la présente invention est atteint par un procédé de remplissage d'un réservoir de stockage de chaleur avec des éléments solides présentant au moins une première taille et une deuxième taille, la première taille étant supérieure à la deuxième taille, le procédé comportant une première étape de mise en place des éléments solides de la première taille dans le réservoir, une deuxième étape de nivellement de la couche d'éléments solides de la première taille ainsi formée de sorte à obtenir une couche d'épaisseur sensiblement constante, une troisième étape de remplissage avec des éléments solides de la deuxième taille des espaces entre les éléments solides de la première taille jusqu'à ce que celui-ci affleure la couche des éléments solides de la première taille, les première, deuxième et troisième étapes étant éventuellement répétées jusqu'à atteindre la hauteur d'éléments solides souhaitée.

Chaque granulométrie correspond à un diamètre d50 d'éléments solides, défini comme la valeur pour laquelle 50 % des éléments solides ont un diamètre inférieur à d50. Le diamètre d50 est désigné également la médiane.

En d'autres termes, les éléments solides sont déversés successivement les uns sur les autres en commençant par ceux présentant une première granulométrie dont la médiane est la plus grande et dans l'ordre des médianes décroissantes.

De manière très avantageuse, un rapport compris entre 8 et 20, est choisi entre la médiane des éléments solides de la première taille et la médiane des éléments solides de la deuxième granulométrie. Un tel rapport permet d'obtenir une porosité relativement faible du lit d'éléments solides. De manière préférée, ce rapport est de l'ordre de 10.

De préférence, le ou les matériaux des éléments solides sont choisis de sorte à présenter une forte masse volumique et une capacité calorifique élevée pour offrir une bonne capacité de stockage thermique.

De préférence également, le ou les matériaux des éléments solides présentent une faible porosité ce qui réduit la quantité de gaz à dégazer lors des premières chauffes du réservoir.

Le procédé de remplissage selon l'invention est particulièrement adapté au remplissage de réservoirs de stockage dans lequel la charge solide est répartie en plusieurs étages, améliorant encore le fonctionnement en piston thermique du réservoir et la fourniture d'un liquide à température constante.

La présente invention a alors pour objet un procédé de remplissage d'un réservoir de stockage thermique avec des éléments solides présentant au moins une première granulométrie et une deuxième granulométrie, la première granulométrie étant supérieure à la deuxième granulométrie, ledit procédé comportant les étapes :
a) déversement d'une première quantité d'éléments solides de la première granulométrie dans le réservoir,
b) nivellement de ladite première quantité d'éléments solides de la première granulométrie de sorte à former une couche de hauteur sensiblement constante,
c) déversement d'une deuxième quantité donnée d'éléments solides de la deuxième granulométrie sur la couche d'éléments solides de la première granulométrie de sorte que les éléments solides de la deuxième granulométrie s'écoulent par gravité entre les éléments solides de la première granulométrie et de sorte que les éléments de la deuxième granulométrie affleurent la couche des éléments solides de la première granulométrie et de sorte à former une couche intermédiaire.

Le procédé de remplissage peut comporter une étape d) de nivellement de la deuxième quantité d'éléments solides de la deuxième granulométrie.

Les étapes a) à c) ou a) à d) peuvent être répétées de sorte à former un empilement de couches intermédiaires jusqu'à atteindre une hauteur donnée d'éléments solides dans le réservoir.

De manière avantageuse, le rapport entre la médiane de la première granulométrie et la médiane de la deuxième granulométrie est compris entre 8 et 20 et est de manière préférée de l'ordre de 10.

Lors de l'étape c) les éléments solides de la deuxième granulométrie sont par exemple répartis sur toute la couche d'éléments solides de la première granulométrie.

La couche intermédiaire peut avoir une hauteur de l'ordre de 15 cm.

De préférence, préalablement à l'étape a) les éléments solides de la première granulométrie sont lavés et séchés.

De préférence également, préalablement à l'étape c) les éléments solides de la deuxième granulométrie sont lavés et séchés.

De manière avantageuse, la première quantité correspond à environ 80 % en masse de la couche intermédiaire et la deuxième quantité correspond à environ 20 % en masse de la couche intermédiaire.

La présente invention a également pour objet un procédé de fabrication d'un réservoir de stockage thermique comportant les étapes :
- fabrication d'un ensemble formé par une virole et un fond inférieur,
- le remplissage selon le procédé selon la présente invention,
- mise en place d'un fond supérieur pour fermer de manière étanche le réservoir,
- remplissage avec le fluide caloporteur.

Dans un mode de réalisation, le réservoir comporte au moins deux compartiments superposés, chaque compartiment comporte un lit d'éléments solides, chaque compartiment étant rempli selon le procédé selon la présente invention

Les éléments solides de la première granulométrie sont par exemple sont des galets alluvionnaires et les éléments solides de la deuxième granulométrie sont par exemple du sable à base de silice.

Le fluide caloporteur est par exemple de l'huile thermique, par exemple du Therminol 66^{®}.

### BRÈVE DESCRIPTION DES DESSINS

La présente invention sera mieux comprise à l'aide de la description qui va suivre et des dessins en annexes sur lesquels :
- les figures 1A à 1C sont des représentations schématiques de différentes étapes du procédé de remplissage selon l'invention,
- la figure 2 est une vue en coupe longitudinale d'un exemple de réalisation d'un réservoir de stockage de chaleur auquel le procédé de remplissage selon l'invention s'applique,
- la figure 3A est une vue en coupe longitudinale d'un autre exemple de réalisation d'un réservoir de stockage de chaleur auquel le procédé de remplissage selon l'invention s'applique,
- les figures 3B et 3C sont des vues de dessus d'un exemple de réalisation de supports destinés à délimiter les compartiments dans le réservoir de la figure 3A,
- la figure 3D est une vue en coupe suivant le plan A-A de la figure 3B,
- la figure 4A est une vue en coupe longitudinale d'une couche d'éléments solides obtenus par un procédé de remplissage de l'état de la technique,
- la figure 4B est une représentation graphique de la variation de température et de la vitesse locale de l'huile dans la couche de la figure 4A en fonction de la distance par rapport à l'axe du réservoir,
- la figure 5 est une vue de dessus d'un exemple de réalisation d'un distributeur pouvant être mis en oeuvre dans le réservoir de la figure 2 ou de la figure 3A,
- la figure 6 est une représentation graphique du pourcentage en masse cumulé en fonction du diamètre en mm des particules d'un exemple d'éléments solides de la deuxième granulométrie pouvant être utilisé dans le remplissage selon la présente invention.

### EXPOSÉ DÉTAILLÉ DE MODES DE RÉALISATION PARTICULIERS

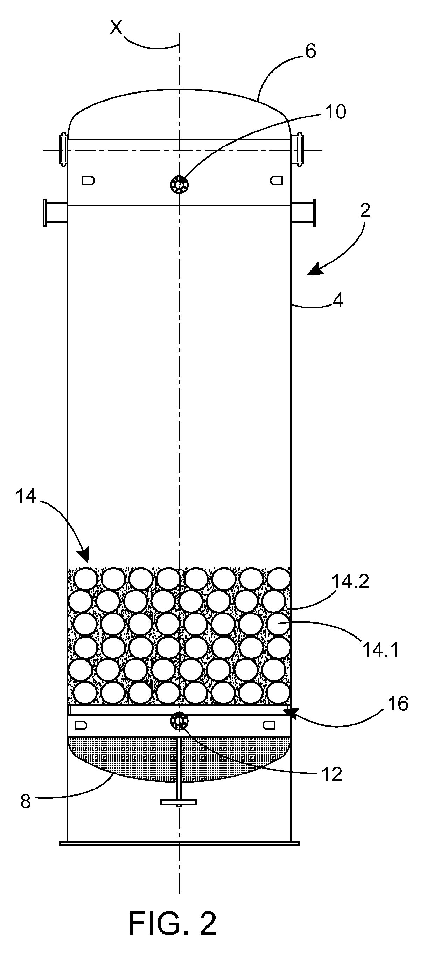

Sur la figure 2, on peut voir une vue en coupe longitudinale d'un exemple de réservoir de stockage de chaleur auquel s'applique le procédé de remplissage selon l'invention.

Le réservoir comporte une enveloppe 2 cylindrique d'axe longitudinal X. Dans l'exemple représenté, le réservoir présente une section circulaire.

L'axe longitudinal X est destiné à être orienté sensiblement verticalement.

L'enveloppe 2 est formée d'une virole 4 et de deux fonds bombés 6, 8 fermant les extrémités longitudinales supérieure et inférieure respectivement de la virole 4.

Le réservoir comporte des moyens d'admission et de collecte 10 de liquide chaud situés dans le fond bombé supérieur 6 du réservoir et des moyens d'admission et de collecte 12 du liquide froid situés dans le fond bombé inférieur 8 en partie basse du réservoir.

Le réservoir comporte un lit 14 d'éléments solides de stockage thermique disposés entre les moyens d'admission et de collecte 10 de liquide chaud et les moyens d'admission et de collecte 12 du liquide froid. Sur la figure 2, le lit 14 est représenté partiellement.

Le lit d'éléments solides 14 repose sur une grille ou plaque ajourée 16 disposée au-dessus des moyens d'admission et de collecte 12 du liquide froid. Le liquide peut alors traverser la grille 16 et les moyens d'admission et de collecte 12 ne supportent par le lit 14.

Le volume utile du réservoir ne comporte pas de zone de vide, si bien que le volume non occupé par les éléments solides est rempli par le fluide caloporteur.

Dans l'exemple représenté, les éléments solides de stockage thermique comportent des éléments solides 14.1 d'une première granulométrie et des éléments solides 14.2 d'une deuxième granulométrie.

Les éléments solides sont considérés comme ayant une forme se rapprochant de la sphère. Chaque granulométrie correspond à un diamètre d50 tel que défini ci-dessus et désigné médiane, la médiane de la première granulométrie étant supérieure à la médiane de la deuxième granulométrie.

Par exemple, les éléments solides de la première granulométrie 14.1 sont formés par des blocs de roche et les éléments solides de la deuxième granulométrie 14.2 sont formés par du sable.

De préférence, le rapport entre les médiane des éléments de première granulométrie 14.1 et des éléments de deuxième granulométrie est compris entre 8 et 20, et de manière préféré est de l'ordre de 10. De tels rapports permettent d'avoir une porosité du mélange résiduelle réduite, par exemple de l'ordre de 30 %.

Le procédé de remplissage comporte les étapes suivantes.

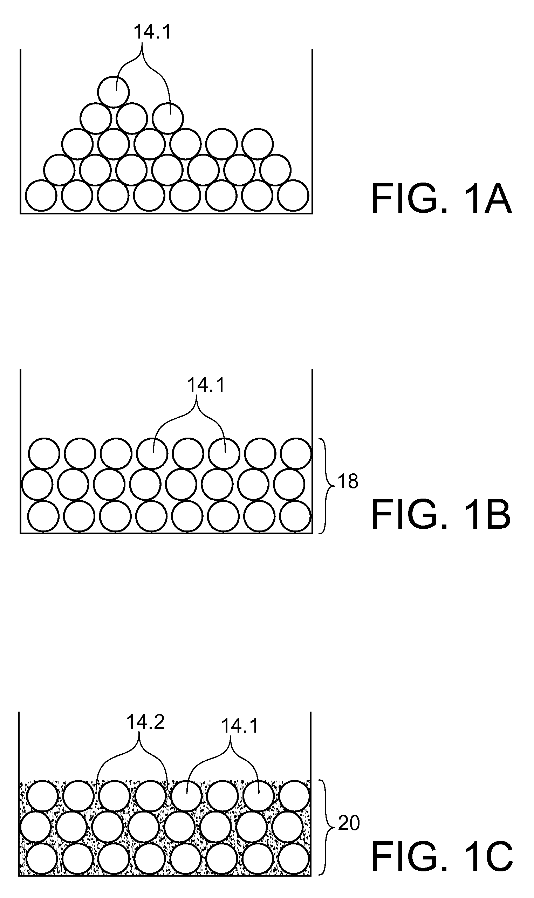

Lors d'une étape a), une première quantité d'éléments solides de la première granulométrie 14.1 est déversée à l'intérieur du réservoir sur la grille 16. Les éléments solides de la première granulométrie 14.1 forment alors un tas au centre de la grille 16. Cette étape est représentée sur la figure 1A. Il est possible de répartir les éléments 14.1 sur la grille 14 lors du déversement de sorte à limiter la formation d'un tas et à relier une couche d'épaisseur plus homogène.

Lors d'une étape b) suivante, le tas est nivelé de sorte à former une couche 18 de hauteur sensiblement constante sur toute la section du réservoir. Le nivellement peut être fait soit manuellement par exemple au moyen d'un râteau ou par un dispositif motorisé. Cette étape est représentée sur la figure 1B.

Lors d'une étape c) suivante, on déverse sur la couche 18 une quantité donnée d'éléments solides de la deuxième granulométrie 14.2. Les éléments solides 14.2 s'écoulent naturellement par gravité entre les éléments solides 14.1 et comblent les espaces entre les éléments solides 14.1 de première granulométrie.

La quantité donnée d'éléments solides de la deuxième granulométrie 14.2 est choisie de sorte que les éléments solides de la deuxième granulométrie 14.2 affleurent la couche 18. Une couche 20 composée d'éléments solides de la première granulométrie 14.1 et de deuxième granulométrie 14.2 est formée. Cette étape est représentée sur la figure 1C.

De préférence, la masse d'éléments solides de la deuxième granulométrie 14.2 représente environ 20 % du lit 14.

L'ajout des éléments solides de la deuxième granulométrie 14.2 peut se faire manuellement ou par l'intermédiaire d'une trémie.

De préférence, les éléments solides de la deuxième granulométrie 14.2 sont déversés de sorte à les répartir sur toute la surface des éléments solides de la première granulométrie 14.1.

L'épaisseur de la couche 18 est déterminée de sorte que les éléments solides de la deuxième granulométrie 14.2 pénètrent facilement entre les éléments solides de la première granulométrie 14.1

De préférence, la couche 18 d'éléments solides de la première granulométrie 14.1 est de l'ordre de 15 cm.

Lors d'une étape d) suivante, un nivellement des éléments solides de la deuxième granulométrie 14.2 est effectué de sorte à obtenir une couche 20 ayant une hauteur sensiblement constante.

L'étape d) peut ne pas avoir lieu si lors du déversement des éléments solides de la deuxième granulométrie 14.2, la couche 20 présente directement une hauteur suffisamment constante.

Les étapes a) à d) sont ensuite répétées jusqu'à ce que le lit 14 soit réalisé.

Lors du remplissage, en particulier lors de l'étape c), il n'y a ni tassement, ni action mécanique, la pénétration des éléments solides de la deuxième granulométrie entre les interstices formés par les éléments de la première granulométrie et le remplissage des interstices par les éléments solides de la deuxième granulométrie sont obtenues uniquement par l'effet de la granulométrie.

Préalablement au remplissage, les éléments solides 14.1 de stockage thermique sont avantageusement lavés, afin de limiter la présence de poussières fines qui pourraient sinon circuler avec le fluide caloporteur.

Préférentiellement, les éléments solides sont séchés. Ce séchage permet de limiter la quantité d'eau introduite dans le réservoir avec les éléments solides, eau qui est dégazée lors de la mise en chauffe du stockage. En outre, le séchage des éléments 14.2 de petit diamètre facilite leur écoulement entre les éléments 14.1.

A la fin du remplissage, le fond supérieur 6 de la cuve est mis en place et serré avec un joint d'étanchéité. L'huile est ensuite introduite dans le réservoir par les moyens de collecte et d'admission inférieurs 12. L'huile remonte dans le lit et chasse l'air contenu dans les espaces libres laissés par les éléments solides.

Le procédé de remplissage selon l'invention par couches successives assure une très bonne homogénéité du mélange à l'échelle du réservoir. En effet, il n'y a pas de différence sensible entre le coeur du lit 14 et sa périphérie. A une échelle locale, toutes les zones présentent sensiblement la même proportion d'éléments solides de la deuxième granulométrie 14.2.

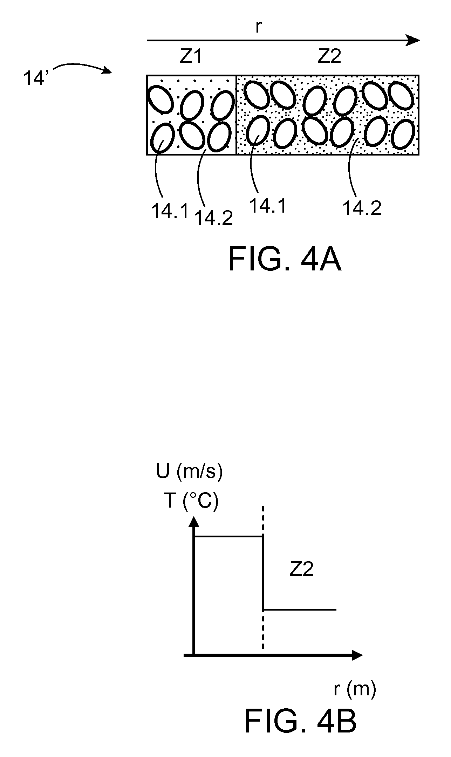

Sur la figure 4A, on peut voir représenté schématiquement en coupe longitudinale un schéma théorique d'un élément de volume d'un lit 14' formé de deux zones Z1, Z2 présentant des proportions d'éléments solides de la deuxième granulométrie 14.2 différentes. L'axe des abscisses représente la distance r dans un plan transversal le long d'un rayon. Cet élément de volume pourrait être situé dans différentes zones du réservoir.

Ce lit est obtenu par le déversement d'un mélange d'éléments solides de la première granulométrie 14.1 et d'éléments solides de la deuxième granulométrie 14.2. Naturellement une ségrégation apparaît entre les éléments 14.1 et 14.2.

Sur la figure 4B, sont représentées la variation de température en °C et de la vitesse de front thermique en m/s au sein de l'élément de volume de 14' de la figure 4A.

Du fait de la faible proportion d'éléments solides de la deuxième granulométrie 14.2 dans la zone Z1 la vitesse d'écoulement est importante par rapport à celle dans la zone Z2. Il en résulte que la température dans la zone Z1 varie alors que dans la zone Z2 elle est sensiblement constante. La zone Z1 est donc une zone d'écoulement préférentielle, ce qui conduit à une déstabilisation transversale du front thermique. Lorsque la vitesse d'écoulement est trop importante, la capacité de stockage thermique des éléments solides de la première granulométrie n'est pas utilisée de manière suffisante.

Grâce au procédé de remplissage selon l'invention le lit 14 a la distribution de la zone Z2, la température qui est alors délivrée par le réservoir est sensiblement constante.

Le lit peut être formé avec des éléments solides présentant plus de deux granulométries différentes par exemple trois. Il sera noté que la granulométrie minimale est choisie de sorte que les éléments solides présentant la granulométrie minimale ne soient pas emportés par le caloporteur, qui pourraient boucher les moyens d'admission et de collecte 10, 12.

Dans le cas où des éléments solides de trois granulométries différentes sont mis en oeuvre pour former le lit, le procédé comporte au moins une étape e) suivant l'étape d) dans laquelle les éléments solides de troisième granulométrie sont déversés sur la couche 20 et ensuite nivelés.

De manière préférentielle, les éléments solides et plus particulièrement les éléments solides de la première granulométrie 14.1 présentant un grand diamètre sont choisis de sorte à avoir une faible porosité. Ainsi la quantité du ou des gaz, qui ne peuvent interagir avec le fluide caloporteur et qui est évacuée avant le remplissage du réservoir avec le fluide caloporteur est réduite. Il peut s'agir d'eau contenue dans les éléments solides, d'air ou de toute autre espèce chimique.

De préférence, le ou les matériaux des éléments solides sont choisis de sorte à présenter une forte masse volumique et une capacité calorifique élevée pour offrir une bonne capacité de stockage thermique. De préférence également, le ou les matériaux des éléments solides présentent une faible porosité ce qui réduit la quantité de gaz à dégazer.

Le ou les matériaux des éléments solides sont choisis de sorte qu'ils n'engendrent pas d'interactions avec le fluide caloporteur : par exemple pour un stockage en huile, les roches alluvionnaires riches en silice conviennent.

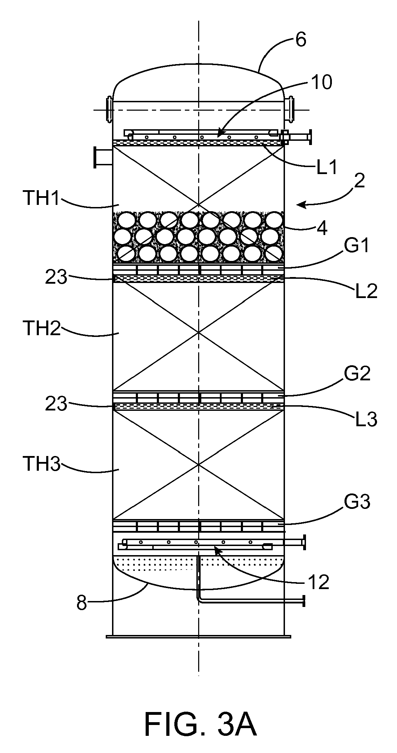

Sur la figure 3A, on peut voir un autre exemple de réalisation d'un réservoir pour lequel le procédé de remplissage selon la présente invention est particulièrement adapté.

L'intérieur du réservoir est divisé en plusieurs compartiments C1, C2, C3 se superposant le long de l'axe longitudinal X. Chaque compartiment C1, C2, C3 comporte un fond G1, G2, G3 formant support assurant la retenue d'éléments de stockage thermiques solides tout en permettant la communication fluidique entre les compartiments et un lit TH1, TH2, TH3 d'éléments de stockage thermiques solides. Seul le lit TH1 est représenté par des éléments solides.

En outre, une couche de liquide caloporteur L2, L3 recouvre les lits TH2, TH3 d'éléments de stockage thermiques solides.

La zone située au dessus du lit TH1 et délimitée par le fond bombé 6 est remplie de liquide. De même la zone située sous le lit TH3 délimité par le fond bombé inférieur 8 est remplie de liquide.

Les supports sont donc adaptés pour supporter mécaniquement les lits de stockage thermique, pour retenir les éléments de faible granulométrie, tels que le sable et à laisser passer le liquide caloporteur.

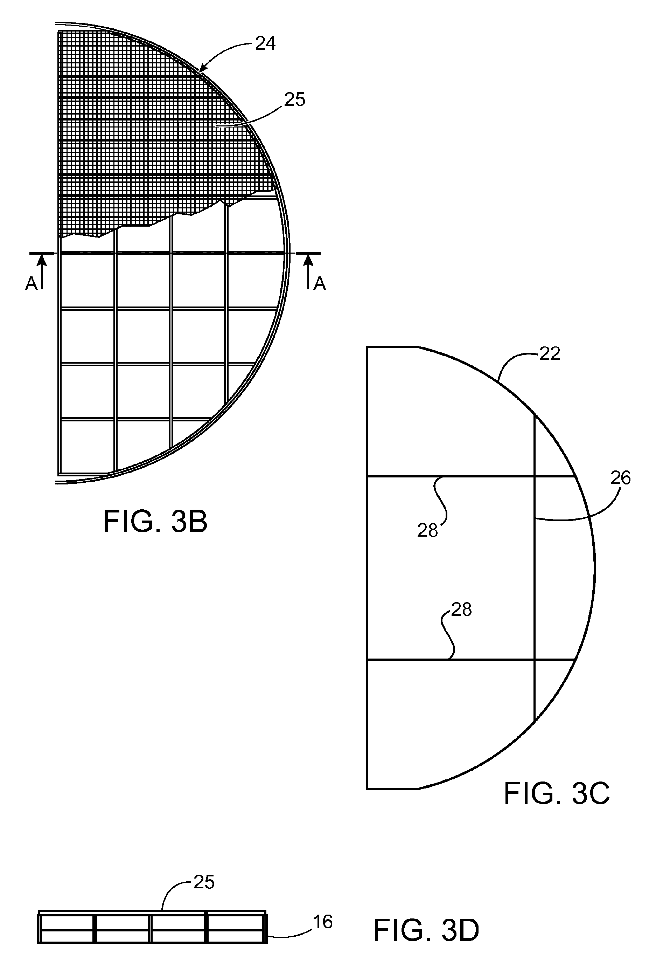

Sur les figures 3B à 3D, ont peut voir des détails d'un support F1 selon un exemple de réalisation.

De manière avantageuse le support G1 est formé de deux demi-supports facilitant son montage dans la virole 4. Un support en une seule pièce peut également être mis en oeuvre.

Sur les figures 3B et 3C, on peut voir une structure porteuse 22 en forme de demi-disque, et un caillebotis 24 en forme de demi-disque recouvert d'une grille 25 reposant sur la structure porteuse 22.

La structure porteuse 22 est formée par des barres porteuses parallèles 26 solidarisées entre elles par des traverses 28 et réalisant une structure en forme de demi-cercle.

Sur la figure 3D, on peut voir une vue en coupe selon le plan A-A de la figure 3B du caillebotis 24 et de la grille 22.

La grille 22 est par exemple formée par une toile métallique dont la taille des mailles est telle qu'elle assure la retenue des éléments solides de plus petit diamètre.

Les supports G1, G2, G3 suspendus dans la virole sont supportés par exemple sur des taquets fixés à la surface interne de la virole.

Les moyens d'admission et de collecte 10, 12 comportent de préférence un orifice pour collecter le fluide chaud et froid respectivement et des moyens de distribution pour alimenter le réservoir en fluide chaude et froid respectivement.

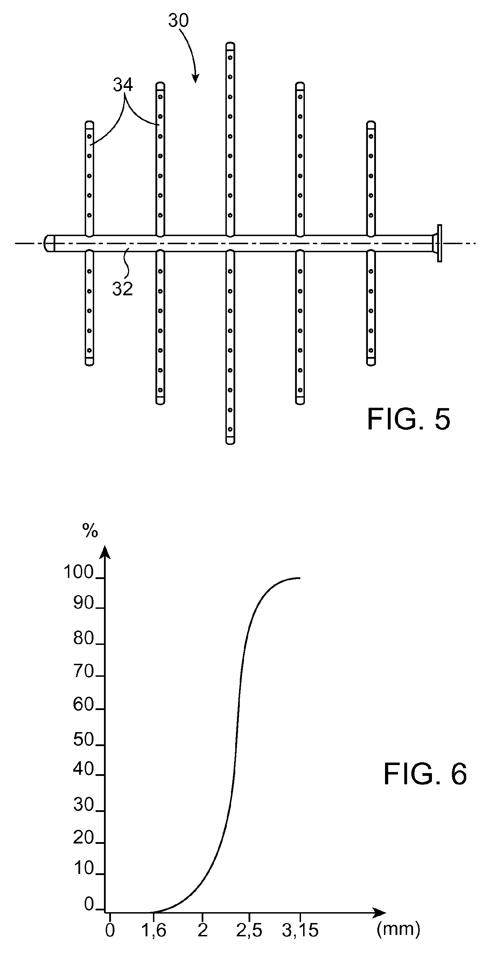

Sur la figure 5, on peut voir un exemple de réalisation avantageux de moyens de distribution de liquide chaud dans le réservoir de la figure 3A vus de dessus.

Les moyens de distribution 30 comportent un conduit d'alimentation 32 relié à l'alimentation en liquide extérieur et des conduits de distribution 34 connectés au conduit d'alimentation et s'étendant transversalement par rapport à celui-ci. Dans l'exemple représenté, les conduits de distribution 34 sont perpendiculaires au conduit d'alimentation 32. Chaque conduit est muni d'une pluralité d'orifices de distribution assurant une distribution du liquide le long de son axe.

Le conduit principal s'étend avantageusement le long d'un diamètre de la virole. De manière avantageuse également les conduits de distribution présentent des longueurs différentes en fonction de leur position le long du conduit principal de sorte que les moyens de distribution couvrent de manière sensiblement homogène toute la section transversale de la virole.

D'autres formes de moyens de distribution peuvent être envisagées, de préférence ces formes assurant une répartition homogène des liquides alimentant le réservoir.

Chaque compartiment est rempli suivant les étapes a) à d) du procédé selon la présente invention. La grille G3 est préalablement mise en place au fond du réservoir et le compartiment C3 est rempli selon les étapes a) à d), ensuite le support G2 est mis en place dans la virole, le compartiment C2 est rempli selon les étapes a) à d), le support G1 est mis en place et le compartiment est rempli selon les étapes a) à d).

Par exemple, le réservoir de la figure 3A présente un diamètre de 2500 mm, trois compartiments dont la hauteur de chaque lit est de 1900 mm, une épaisseur de la couche de liquide de 100 mm et une température de fonctionnement comprise entre 150°C et 300°C.

Pour assurer la tenue mécanique, on cherche à avoir un rapport hauteur de lit sur diamètre de lit inférieur à 1.

La segmentation du lit d'éléments solides permet d'atteindre, pour chaque compartiment, un rapport hauteur du lit de stockage thermique sur le diamètre de la virole inférieur à 1 ce qui permet de réduire l'effet de thermal ratcheting et donc d'assurer une bonne tenue mécanique. Et simultanément, la segmentation permet d'avoir une hauteur totale de lit d'éléments solides importante et donc un rapport hauteur totale sur diamètre grand. On obtient donc des propriétés de stockage importantes en durée et en volume de zone isotherme.

En outre, cette structure de réservoir assure qu'en cas d'inhomogénéités transversales de température, des gradients de température et donc des gradients de masse volumique de liquide apparaissent dans les couches liquides, ce qui conduit à l'apparition de mouvements de convection naturelle qui tendent à réduire ce gradient. Ainsi en combinant la structure du réservoir de la figure 3A et le procédé de remplissage selon l'invention, le fonctionnement du réservoir est sensiblement amélioré.

Nous allons maintenant décrire un exemple de mise en fonctionnement d'un réservoir de stockage thermique.

Après remplissage de caloporteur liquide, par exemple d'huile, du réservoir, on réalise de préférence des étapes successives de montée en température afin de dégazer au mieux le lit d'éléments solides.

L'huile chaude est délivrée par les moyens de collecte et d'amission supérieurs 10.

Lors d'une première étape, on chauffe à 60°C de l'intégralité du lit ave un maintien à cette température d'au moins 4h afin d'extraire du lit les résidus d'air contenus dans les porosités à une température où l'huile ne s'oxyde pas.

Lors d'une étape suivante, la température est élevée vers 120°C-130°C pendant plusieurs heures afin de dégazer la vapeur d'eau. La température est supérieure à 100°C car elle correspond à la température de saturation de l'eau sous la pression hydrostatique en fond de cuve. Pendant ce palier la vapeur est évacuée par une purge située sur le couvercle supérieur du réservoir. De préférence, cette opération est réalisée lentement afin d'éviter une augmentation trop importante de la pression dans le réservoir.

Lors d'une étape suivante, on augmente successivement les températures avec un maintien pendant une à plusieurs heures à chaque température, il peut s'agir de palier de 30°C, jusqu'à la température maximale afin de dégazer les éléments volatils de l'huile. Cette température maximale est de 300°C pour l'huile Therminol 66^{®}.

A titre d'exemple, les éléments solides de la première granulométrie 14.1 sont des galets alluvionnaires constitués très majoritairement de silice de diamètre moyen de 2,5 cm. Les galets sont obtenus par tamisage de roches de carrière alluvionnaire, par exemple au moyen d'un tamis à maille 20 mm et 30 mm. Les éléments solides de la deuxième granulométrie 14.2 sont du sable comprenant des particules à base de silice (composition typique 87%SiO₂, 6% Al₂O₃, 3%K₂O) de diamètre moyen proche de 2,5 mm. Sur la figure 6, est représenté le pourcentage en masse cumulé en fonction du diamètre en mm des particules.

Le lit 14 comporte 20 % en masse de sable, ce qui permet d'atteindre une porosité du lit de roche d'environ 30 %. Les galets et le sable ont une densité d'environ 2500 kg/m³.

Grâce au procédé de remplissage selon la présente invention, on obtient une stratification thermique de bonne qualité avec une très bonne homogénéité transversale en température. La proportion utile du réservoir de chaleur est donc augmentée et un fonctionnement amélioré du système de stockage qui se rapproche alors du fonctionnement en piston thermique est obtenu.

De plus, du fait de cette répartition homogène des éléments des différents granulométrie, les risques d'apparition de court-circuit hydrauliques le long des parois ou de zone morte qui ne participerait pas à l'échange thermique au centre sont fortement réduits. La totalité du réservoir est alors utilisé pour le stockage thermique.

Par ailleurs, puisque le fonctionnement en piston thermique est amélioré, le maintien d'une température constante en sortie du réservoir est favorisé et donc un bon rendement et une meilleure durée de vie du système, par exemple une turbine, auquel le réservoir fournit la chaleur lors du déstockage.

En outre, grâce au remplissage par couche successives, il est possible de disposer des thermocouples en différents points d'une section du lit de stockage et dans plusieurs sections du lit, ce qui permet de mesurer la température de l'huile au coeur du lit. Il est envisageable de disposer des thermocouples dans les roches en les perçant. Ces mesures de température, notamment celles au coeur des roches permettent de suivre l'avancée du front thermique et de contrôler que le transfert de chaleur entre le caloporteur liquide et les roches est optimal. Si le transfert est bon, on mesure un faible gradient thermique entre des thermocouples proches dans le caloporteur liquide et dans la roche. Cela permet également d'adapter le débit de fluide caloporteur en fonction du comportement réellement observé à différentes hauteurs du lit d'éléments solides.

Grâce au procédé de remplissage, on évite également le recours à la mise en vibration du réservoir, ce qui simplifie le remplissage des réservoirs et permet le remplissage de réservoirs de grande taille.

Le procédé de remplissage selon l'invention est notamment particulièrement adapté à la fabrication de réservoirs pour le stockage de chaleur produite par des centrales solaires à concentration de type Fresnel ou cylindro-parabolique, mais également les centrales solaires à tour.

Ce procédé de remplissage est également adapté à la fabrication de réservoirs de stockage thermique requérant des températures maîtrisées et constante à la décharge du réservoir.

## Revendications

1. Procédé de remplissage d'un réservoir de stockage thermique avec des éléments solides (14.1, 14.2) présentant au moins une première granulométrie et une deuxième granulométrie, la première granulométrie étant supérieure à la deuxième granulométrie, ledit procédé comportant les étapes :
a) déversement d'une première quantité d'éléments solide de la première granulométrie (14.1) dans le réservoir,
b) nivellement de ladite première quantité d'éléments solides de la première granulométrie (14.1) de sorte à former une couche de hauteur sensiblement constante,
c) déversement d'une deuxième quantité donnée d'éléments solides de la deuxième granulométrie (14.2) sur la couche d'éléments solides de la première granulométrie (14.1) de sorte que les éléments solides de la deuxième granulométrie (14.2) s'écoulent par gravité entre les éléments solides de la première granulométrie (14.1) et de sorte que les éléments de la deuxième granulométrie (14.2) affleurent la couche des éléments solides de la première granulométrie (14.1) et de sorte à former une couche intermédiaire (20),
**caractérisé en ce que** les étapes a) à c) sont répétées de sorte à former un empilement de couches intermédiaires (20) jusqu'à atteindre une hauteur donnée d'éléments solides dans le réservoir.

2. Procédé de remplissage selon la revendication 1, comportant une étape d) de nivellement de la deuxième quantité d'éléments solides de la deuxième granulométrie (14.2), après chaque étape c).

3. Procédé de remplissage selon la revendication 1 ou 2, dans lequel le rapport entre la médiane la première granulométrie et la médiane de la deuxième granulométrie est compris entre 8 et 20.

4. Procédé de remplissage selon la revendication 3, dans lequel le rapport entre la médiane la première granulométrie et la médiane de la deuxième granulométrie est de l'ordre de 10.

5. Procédé de remplissage selon l'une des revendications 1 à 4, dans lequel lors de l'étape c) les éléments solides de la deuxième granulométrie (14.2) sont répartis sur toute la couche d'éléments solides de la première granulométrie.

6. Procédé de remplissage selon la revendication 5, dans lequel les éléments solides de la deuxième granulométrie (14.2) sont déversés de sorte à les répartir de manière homogène sur toute la hauteur de la couche d'éléments solides de la première granulométrie.

7. Procédé de remplissage selon l'une des revendications 1 à 6, dans lequel lors du remplissage il n'y a ni tassement, ni action mécanique,

8. Procédé de remplissage selon l'une des revendications 1 à 7, dans lequel la couche intermédiaire (20) a une hauteur de l'ordre de 15 cm.

9. Procédé de remplissage selon l'une des revendications 1 à 8, dans lequel préalablement à l'étape a) les éléments solides de la première granulométrie (14.1) sont lavés et séchés.

10. Procédé de remplissage selon l'une des revendications 1 à 9, dans lequel préalablement à l'étape c) les éléments solides de la deuxième granulométrie sont lavés (14.1) et séchés.

11. Procédé de remplissage selon l'une des revendications 1 à 10, dans lequel la première quantité correspond à environ 80 % en masse de la couche intermédiaire (20) et la deuxième quantité correspond à environ 20 % en masse de la couche intermédiaire (20).

12. Procédé de remplissage selon l'une des revendications 1 à 11, dans lequel le réservoir de stockage thermique est un réservoir de type thermocline dual.

13. Procédé de fabrication d'un réservoir de stockage thermique comportant les étapes :
- fabrication d'un ensemble formé par une virole (4) et un fond inférieur (8),
- le remplissage selon le procédé selon revendications 1 à 12,
- mise en place d'un fond supérieur (6) pour fermer de manière étanche le réservoir,
- remplissage avec le fluide caloporteur.

14. Procédé de fabrication d'un réservoir de stockage thermique, dans lequel le réservoir comporte au moins deux compartiments (C1, C2, C3) superposés, chaque compartiment comporte un lit d'éléments solides, chaque compartiment étant rempli selon le procédé selon l'une des revendications 1 à 12.

15. Procédé de fabrication selon l'une des revendications 13 ou 14, dans lequel les éléments solides de la première granulométrie (14.1) sont des galets alluvionnaires et les éléments solides de la deuxième granulométrie (14.2) sont du sable à base de silice.

16. Procédé de fabrication d'un réservoir de stockage thermique selon la revendication 13, 14 ou 15, dans lequel le fluide caloporteur est de l'huile thermique, par exemple du Therminol 66^{®}.

## Patentansprüche

1. Verfahren zum Füllen eines Wärmespeicherreservoirs mit festen Elementen (14.1, 14.2), die wenigstens eine erste Korngröße und eine zweite Korngröße aufweisen, wobei die erste Korngröße größer als die zweite Korngröße ist, wobei das Verfahren die folgenden Schritte umfasst:
a) Einleiten einer ersten Menge von festen Elementen der ersten Korngröße (14.1) in das Reservoir,
b) Nivellieren der ersten Menge von festen Elementen der ersten Korngröße (14.1) derart, dass eine Schicht von im Wesentlichen konstanter Höhe gebildet wird,
c) Einleiten einer zweiten gegebenen Menge von festen Elementen der zweiten Korngröße (14.2) auf die Schicht von festen Elementen der ersten Korngröße (14.1) derart, dass die festen Elemente der zweiten Korngröße (14.2) durch Schwerkraft zwischen die festen Elemente der ersten Korngröße (14.1) fließen und derart, dass die Elemente der zweiten Korngröße (14.2) auf gleicher Höhe mit der Schicht der festen Elemente der ersten Korngröße (14.1) liegen und derart, dass eine Zwischenschicht (20) gebildet wird,
**dadurch gekennzeichnet, dass** die Schritte a) bis c) derart wiederholt werden, dass ein Stapel von Zwischenschichten (20) gebildet wird, bis eine gegebene Höhe von festen Elementen in dem Reservoir erreicht wird.

2. Verfahren zum Füllen nach Anspruch 1, umfassend einen Schritt d) des Nivellierens der zweiten Menge von festen Elementen der zweiten Korngröße (14.2) nach jedem Schritt c).

3. Verfahren zum Füllen nach Anspruch 1 oder 2, bei dem das Verhältnis zwischen dem Medianwert der ersten Korngröße und dem Medianwert der zweiten Korngröße zwischen 8 und 20 enthalten ist.

4. Verfahren zum Füllen nach Anspruch 3, bei dem das Verhältnis zwischen dem Medianwert der ersten Korngröße und dem Medianwert der zweiten Korngröße in der Größenordnung von 10 liegt.

5. Verfahren zum Füllen nach einem der Ansprüche 1 bis 4, bei dem während des Schritts c) die festen Elemente der zweiten Korngröße (14.2) über die gesamte Schicht von festen Elementen der ersten Korngröße verteilt werden.

6. Verfahren zum Füllen nach Anspruch 5, bei dem die festen Elemente der zweiten Korngröße (14.2) derart eingeleitet werden, dass sie homogen über die gesamte Höhe der Schicht von festen Elementen der ersten Korngröße verteilt werden.

7. Verfahren zum Füllen nach einem der Ansprüche 1 bis 6, bei dem während des Füllens weder eine Absenkung noch eine mechanische Wirkung auftritt.

8. Verfahren zum Füllen nach einem der Ansprüche 1 bis 7, bei dem die Zwischenschicht (20) eine Höhe in der Größenordnung von 15 cm hat.

9. Verfahren zum Füllen nach einem der Ansprüche 1 bis 8, bei dem die festen Elemente der ersten Korngröße (14.1) vor dem Schritt a) gewaschen und getrocknet werden.

10. Verfahren zum Füllen nach einem der Ansprüche 1 bis 9, bei dem die festen Elemente der zweiten Korngröße vor dem Schritt c) gewaschen (14.1) und getrocknet werden.

11. Verfahren zum Füllen nach einem der Ansprüche 1 bis 10, bei dem die erste Menge ungefähr 80 Masse-Prozent der Zwischenschicht (20) entspricht, und die zweite Menge ungefähr 20 Masse-Prozent der Zwischenschicht (20) entspricht.

12. Verfahren zum Füllen nach einem der Ansprüche 1 bis 11, bei dem das Wärmespeicherreservoir ein Reservoir vom Dual-Thermocline-Typ ist.

13. Verfahren zur Herstellung eines Wärmespeicherreservoirs, umfassend die folgenden Schritte:
- Herstellen einer Gesamtanordnung, gebildet mit einem Mantel (4) und einem unteren Boden (8),
- Füllen gemäß dem Verfahren nach den Ansprüchen 1 bis 12,
- Platzieren eines oberen Bodens (6) zum dichten Verschließen des Reservoirs,
- Füllen mit dem Wärmeübertragungsfluid.

14. Verfahren zur Herstellung eines Wärmespeicherreservoirs, bei dem das Reservoir wenigstens zwei Kammern (C1, C2, C3) übereinander umfasst, wobei jede Kammer ein Bett von festen Elementen umfasst, wobei jede Kammer gemäß dem Verfahren nach einem der Ansprüche 1 bis 12 gefüllt wird.

15. Verfahren zur Herstellung nach einem der Ansprüche 13 oder 14, bei dem die festen Elemente der ersten Korngröße (14.1) Schwemmkiesel sind, und die festen Elemente der zweiten Korngröße (14.2) Sand auf Quarzbasis sind.

16. Verfahren zur Herstellung eines Wärmespeicherreservoirs nach Anspruch 13, 14 oder 15, bei dem das Wärmeübertragungsfluid Wärmeöl ist, beispielsweise Therminol 66 ®.

## Claims

1. Method for filling a heat storage tank with solid elements (14.1, 14.2) having at least one first particle size and one second particle size, the first particle size being greater than the second particle size, said method comprising the following steps:
a) pouring a first quantity of solid elements of the first particle size (14.1) into the tank,
b) levelling said first quantity of solid elements of the first particle size (14.1) so as to form a layer of substantially constant height,
c) pouring a second given quantity of solid elements of the second particle size (14.2) over the layer of solid elements of the first particle size (14.1) such that the solid elements of the second particle size (14.2) flow by gravity between the solid elements of the first particle size (14.1) and such that the elements of the second particle size (14.2) are flush with the layer of the solid elements of the first particle size (14.1) and so as to form an intermediate layer (20),
**characterized in that** steps a) to c) are repeated so as to form a stack of intermediate layers (20) until a given height of solid elements is reached in the tank.

2. Method for filling according to claim 1, comprising a step d) of levelling the second quantity of solid elements of the second particle size (14.2), after each step c).

3. Method for filling according to claim 1 or 2, in which the ratio between the median of the first particle size and the median of the second particle size is comprised between 8 and 20.

4. Method for filling according to claim 3, in which the ratio between the median of the first particle size and the median of the second particle size is of the order of 10.

5. Method for filling according to one of claims 1 to 4, in which during step c) the solid elements of the second particle size (14.2) are spread out over the whole layer of solid elements of the first particle size.

6. Method for filling according to claim 5, in which the solid elements of the second particle size (14.2) are poured so as to spread them out homogeneously over the whole height of the layer of solid elements of the first particle size.

7. Method for filling according to one of claims 1 to 6, in which during filling there is no packing down, nor mechanical action.

8. Method for filling according to one of claims 1 to 7, in which the intermediate layer (20) has a height of the order of 15 cm.

9. Method for filling according to one of claims 1 to 8, in which prior to step a) the solid elements of the first particle size (14.1) are washed and dried.

10. Method for filling according to one of claims 1 to 9, in which prior to step c) the solid elements of the second particle size are washed (14.1) and dried.

11. Method for filling according to one of claims 1 to 10, in which the first quantity corresponds to around 80% by weight of the intermediate layer (20) and the second quantity corresponds to around 20% by weight of the intermediate layer (20).

12. Method for filling according to one of claims 1 to 11, in which the heat storage tank is a dual thermocline type tank.

13. Method for manufacturing a heat storage tank comprising the following steps:
- manufacturing an assembly formed of a collar (4) and a lower end (8),
- filling according to the method according to claims 1 to 12,
- putting in place an upper end (6) to seal the tank in a leak tight manner,
- filling with the heat transfer fluid.

14. Method of manufacturing a heat storage tank according to claim 13, in which the tank comprises at least two superposed compartments (C1, C2, C3), each compartment comprises a bed of solid elements, each compartment being filled according to the method according to one of claims 1 to 12.

15. Method of manufacturing according to one of claims 13 or 14, in which the solid elements of the first particle size (14.1) are alluvial pebbles and the solid elements of the second particle size (14.2) are silica based sand.

16. Method of manufacturing a heat storage tank according to claim 13, 14 or 15, in which the heat transfer fluid is thermal oil, for example Therminol 66^{®}.
